# EUROPEAN PATENT APPLICATION

(11) **EP 4 614 649 A1**
(43) Date of publication of application: **10.09.2025**
(21) Application number: 23885797.3
(22) Date of filing: 01.11.2023
(51) Int. Cl.: H01M 10/0567, H01M 10/052, H01M 10/0569

(54) **ELECTROLYTIC SOLUTION FOR LITHIUM ION SECONDARY BATTERIES, AND LITHIUM ION SECONDARY BATTERY**

(30) Priority: 01.11.2022 JP 2022175494
(71) Applicant: Kyocera Corporation, Kyoto-shi, Kyoto 612-8501 (JP)
(72) Inventor: OGAWA, Ryohei, Kyoto-shi, Kyoto 612-8501 (JP); FUKUMITSU, Hitoshi, Kyoto-shi, Kyoto 612-8501 (JP); TODOKI, Hitomi, Kyoto-shi, Kyoto 612-8501 (JP); MATSUMURA, Ryo, Kyoto-shi, Kyoto 612-8501 (JP); ABE, Koji, Ube-shi, Yamaguchi 755-8611 (JP); TODOROV, Yanko Marinov, Ube-shi, Yamaguchi 755-8611 (JP)
(74) Representative: TBK
(86) International application number: PCT/JP2023/039392
(87) International publication number: WO 2024/096043

(57) **Abstract**

The present disclosure provides a lithium ion secondary battery excellent in cycle properties which are important for secondary batteries to be installed in vehicles such as electric vehicles, and provides an electrolytic solution that can be used for producing such a lithium ion secondary battery. An electrolytic solution for a lithium ion secondary battery is an electrolytic solution for a lithium ion secondary battery in which an electrolyte is dissolved in a nonaqueous solvent, and contains cyanomethyl formate and vinylene carbonate. The lithium ion secondary battery includes a positive electrode, a negative electrode, a separator, and the electrolytic solution for a lithium ion secondary battery.

## Description

### TECHNICAL FIELD

The present disclosure relates to an electrolytic solution for a lithium ion secondary battery having excellent battery characteristics such as a battery cycle life, and to a lithium ion secondary battery including the electrolytic solution.

### BACKGROUND OF INVENTION

In recent years, lithium ion secondary batteries (hereinafter also referred to as LIBs) have become higher in energy density and higher in voltage. In particular, development has been conducted for the purpose of improving high cycle life, high temperature storage characteristics, and the like.

Patent Document 1 proposes a lithium ion secondary battery having excellent cycle properties, by using a nonaqueous electrolytic solution containing a formate ester, the nonaqueous electrolytic solution having an electrolyte such as LiPF₆ or LiBF₄ dissolved in a nonaqueous solvent (for example, EC, PC, MEC, or the like).

However, the formate ester described in Patent Document 1 is a compound having a hydrocarbon group such as octyl formate, allyl formate, or 2-propynyl formate, and cyanomethyl formate having a -C≡N group is nowhere disclosed in the patent document.

### CITATION LIST

### PATENT LITERATURE

Patent Document 1: JP 4899862 B

### SUMMARY

An electrolytic solution for a lithium ion secondary battery according to an aspect of the present disclosure is an electrolytic solution for a lithium ion secondary battery in which an electrolyte salt is dissolved in a nonaqueous solvent, the electrolytic solution for a lithium ion secondary battery containing cyanomethyl formate and vinylene carbonate.

A lithium ion secondary battery according to an aspect of the present disclosure is a lithium ion secondary battery including a positive electrode, a negative electrode, a separator, and a nonaqueous electrolytic solution in which an electrolyte salt is dissolved in a nonaqueous solvent, and contains cyanomethyl formate and vinylene carbonate as the electrolytic solution for a lithium ion secondary battery in which the electrolyte salt is dissolved in the nonaqueous solvent.

### BRIEF DESCRIPTION OF THE DRAWINGS

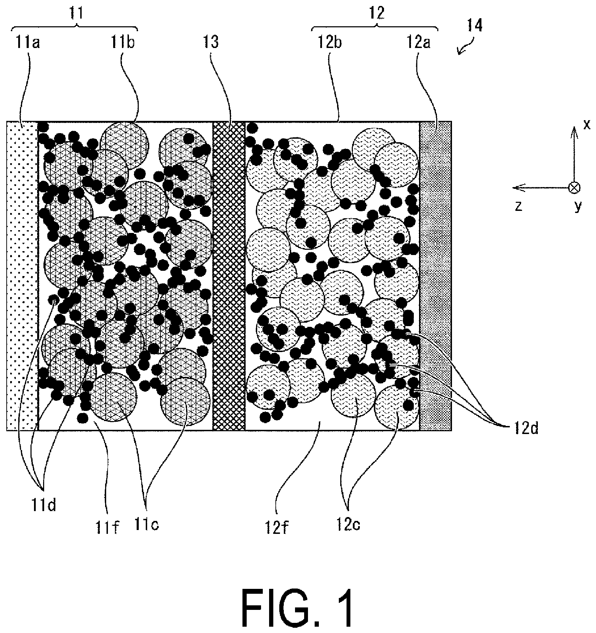

FIG. 1 is a cross-sectional view illustrating a structure of a lithium ion secondary battery.

### DESCRIPTION OF EMBODIMENTS

Hereinafter, embodiments and configurations of the present disclosure will be exemplified, but the present disclosure is not limited to these embodiments and configurations. All embodiments and configurations are included in the present disclosure as long as they are in accordance with the intention of the recitation of the claims, the descriptions of the solution to problem and the advantageous effect, and the like.

The present disclosure solves the problems as described above and provides a lithium ion secondary battery excellent in cycle properties, which is important in a secondary battery for a vehicle such as an electric vehicle, a secondary battery for a storage battery for a house, or a secondary battery for a large-scale power storage system. The present disclosure also provides an electrolytic solution that can be used for producing such a lithium ion secondary battery.

An electrolytic solution for a lithium ion secondary battery is a nonaqueous electrolytic solution in which an electrolyte salt is dissolved in a nonaqueous solvent. The electrolytic solution for a lithium ion secondary battery of the present disclosure contains cyanomethyl formate and vinylene carbonate (VC). By using the electrolytic solution for a lithium ion secondary battery in the present disclosure, a lithium ion secondary battery having excellent cycle properties can be produced.

The electrolyte salt is not particularly limited, and examples thereof may include electrolyte salts such as lithium salts such as: LiN(SO₂F)₂ (hereinafter, also referred to as LiFSI) and the like, having an SO₂ group; LiOSO₂F and the like, having an SO₃ group; LiOSO₃CH₃, LiOSO₃C₂H₅ and the like, having an SO₄ group; LiPF₆, LiPO₂F₂, lithium difluorobis(oxalato)phosphate (LiDFOP) and the like, having phosphorus (P); LiBF₄, lithium bis(oxalato)borate (LiBOB), and lithium difluoro(oxalato)borate (LiDFOB), having boron (B); and LiAsF₆ having arsenic (As). In the present disclosure, one electrolyte salt may be used, or two or more electrolyte salts may be used in combination.

As the electrolyte salt, the lithium salts may be used alone, or two or more of them may be used. Examples of the lithium salt include LiFSI, LiPF₆, LiN(SO₂F)₂, LiPO₂F₂, and LiOSO₃CH₃. When the concentration of the electrolyte salt is too small, the number of lithium ions moving in the electrolytic solution is small, so that battery performance deteriorates. In addition, when the concentration of the electrolyte salt is too high, a viscosity of the electrolytic solution increases, and the lithium ions hardly move, so that the battery performance deteriorates. The electrolyte salt may be LiPF₆ and/or LiN(SO₂F)₂. A total concentration of the electrolyte salt may be in a range of from 0.5 to 3 mol or in a range of from 0.8 to 2 mol with respect to 1 L of a volume of the nonaqueous solvent.

In the present disclosure, since corrosion resistance to metals such as aluminum is improved, LiFSI having high chemical thermal stability and capable of improving battery performance at high temperatures can be used in many cases. Also, the addition of a certain amount of an Li salt other than LiFSI is preferable because the Li salt has an effect of supplementarily improving the battery performance at a low temperature. As a preferable combination of these lithium salts, a combination of two lithium salts, i.e., a lithium salt having an SO₂ group and a lithium salt having phosphorus (P), or a combination of three lithium salts, i.e., a lithium salt having an SO₂ group, a lithium salt having an SO₄ group and a lithium salt having phosphorus (P) is preferable.

When LiFSI and another Li salt are used, a mass ratio of LiFSI to another Li salt (LiFSI: another Li salt) is in a range of preferably from 100:0 to 1:99, more preferably from 100:0 to 50:50, and most preferably from 100:0 to 70:30.

The nonaqueous solvent in the present disclosure is not particularly limited as long as it is generally used as a nonaqueous solvent of an electrolytic solution for a lithium ion battery, and examples thereof may include a cyclic carbonate and a chain carbonate. Suitable examples of the cyclic carbonate include ethylene carbonate (EC), fluoroethylene carbonate (FEC), and propylene carbonate (PC). Suitable examples of the chain carbonate include dimethyl carbonate (DMC), ethyl methyl carbonate (EMC), and diethyl carbonate (DEC). In addition, γ-butyrolactone (GBL) of a cyclic compound may be included. In addition, at least two selected from ethylene carbonate (EC), propylene carbonate (PC), and γ-butyrolactone (GBL) may be contained. EC has a flash point of 143°C, PC has a flash point of 133°C, and they are cyclic carbonates having a flash point of 80°C or higher. GBL has a flash point of 100°C, and is a cyclic compound having a flash point of 80°C or higher. The nonaqueous solvent is contained in an amount of from 80 to 100 vol% in total of at least two selected from EC, PC, and GBL. The volume% is a ratio to the volume of the entire nonaqueous solvent. In the present disclosure, the nonaqueous solvent is preferably contained in an amount of from 90 to 100 vol% in total of at least two selected from EC, PC, and GBL.

When a volume ratio of EC in the nonaqueous electrolytic solution is too large, the electrolytic solution becomes solid at room temperature. Thus, a volume ratio of EC to PC and GBL in the nonaqueous solvent may be EC/(PC + GBL) = from 65/35 to 10/90, or may be from 40/60 to 20/80.

The nonaqueous electrolytic solution in the present disclosure may be used by mixing an additive in addition to the nonaqueous solvent. Examples of other additives used in combination with a main solvent include at least one selected from fluoroethylene carbonate, succinic anhydride, maleic anhydride, biphenyl, LiBF₂ (C₂O₄), LiB (C₂O₄)₂ (LiBOB), 1,3-propane sultone, and ethylene sulfate. When the entire nonaqueous solvent is 100 wt.%, the additive may be contained in an amount of 10 wt.% or less, 5 wt.% or less, or 3 wt.% or less.

The cyanomethyl formate used in the present disclosure has two characteristics. First, it has a molecular weight lower than a molecular weight of DMC of 90 used as one of the main solvents. The molecular weight is 85, which is lower than a molecular weight of VC of 86 which is an additive currently used worldwide. Since a molar amount of the additive electrochemically acts, it is important, from the viewpoint of performance and cost, that a high effect due to addition can be obtained with a small added amount. Second, an oxidative decomposition potential of VC is 4.85 V while that of cyanomethyl formate is 5.4 V, and a reductive decomposition potential of VC is 0.8 V while that of cyanomethyl formate is 1.1 V. From these facts, cyanomethyl formate is a compound which is more difficult to oxidatively decompose and more easily reduced than VC. At present, it is important that oxidative decomposition does not easily occur on an Ni positive electrode in the course of increasing the voltage, and it is advantageous in terms of performance to form a protective film by early reductive decomposition on a highly active graphite negative electrode.

In the present disclosure, a content of cyanomethyl formate in the electrolytic solution for a lithium ion secondary battery is not particularly limited, and too low a content thereof results in insufficient formation of the protective film of the negative electrode. Thus, the cycle properties deteriorate. When the content of cyanomethyl formate is too large, the protective film of the negative electrode becomes thick, and the resistance of the negative electrode increases, leading to deterioration of the cycle properties. The content of cyanomethyl formate with respect to the weight of the entire nonaqueous solvent is not particularly limited, and may be from 0.01 to 10 wt.%, from 0.01 to 7 wt.%, or from 0.1 to 5 wt.%. In the electrolytic solution for a lithium ion secondary battery of the present disclosure, the electrolytic solution contains cyanomethyl formate, whereby the corrosion resistance of the lithium ion secondary battery can be improved.

In order to further improve the corrosion resistance of the lithium ion secondary battery, the electrolytic solution for a lithium ion secondary battery of the present disclosure may contain, in addition to cyanomethyl formate, at least one compound selected from the group consisting of a phosphonate ester compound represented by Formula (I) described below, a carbonate ester compound represented by Formula (II) described below, an oxalate ester compound represented by Formula (III) described below, and a methanesulfonate ester compound represented by Formula (IV) described below.

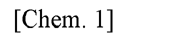

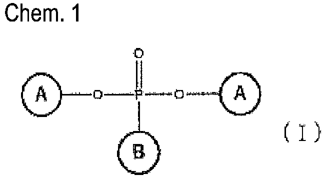

(In the formula, A and B are each independent, A represents a methyl group, an ethyl group, a 2-cyanoethyl group (propionitrile group), a 1-cyanoethyl group, a 2-cyano-2-propyl group, or a 2-propynyl group (propargyl group), and B represents a methyl group, an ethyl group, a vinyl group, or a cyanomethyl group.)
24 phosphonate ester compounds represented by Formula (I) are listed in Table 1.

### [Table 1]

**Table 1**

| A | B |
|---|---|
| -CH₃ | -CH₃ |
| | -CH₂CH₃ |
| | -CH = CH₂ |
| | -CH₂C ≡ N |
| -CH₂CH₃ | -CH₃ |
| | -CH₇CH₃ |
| | -CH = CH₂ |
| | -CH₂C ≡ N |
| -CH₂CH₂C≡N | -CH₃ |
| | -CH₂CH₃ |
| | -CH = CH₂ |
| | -CH₂C ≡ N |
| -CH₂C≡CH | -CH₃ |
| | -CH₂CH₃ |
| | -CH = CH₂ |
| | -CH₂C ≡ N |
| -C(CH₃)₂C≡N | -CH₃ |
| | -CH₂CH₃ |
| | -CH = CH₂ |
| | -CH₂C ≡ N |
| -CH(CH₃)C≡N | -CH₃ |
| | -CH₂CH₃ |
| | -CH = CH₂ |
| | -CH₂C ≡ N |

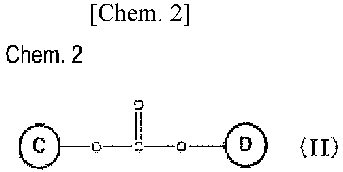

(In the formula, C and D are each independent, C represents a methyl group or an ethyl group, and D represents a 2-cyanoethyl group (propionitrile group), a 1-cyanoethyl group, a 2-cyano-2-propyl group, or a 2-propynyl group (propargyl group).)
8 carbonate ester compounds represented by Formula (II) are listed in Table 2.

### [Table 2]

**Table 2**

| C | D |
|---|---|
| -CH₃ | -CH₂CH₂C ≡ N |
| | -C(CH₃)₂C ≡ N |
| | -CH(CH₃)C ≡ N |
| | -CH₂C ≡ CH |
| -CH₂CH₃ | -CH₂CH₂C ≡ N |
| | -C(CH₃)₂C ≡ N |
| | -CH(CH₃)C ≡ N |
| | -CH₂C ≡ CH |

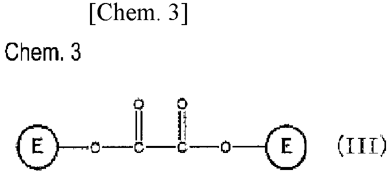

(In the formula, E represents a 2-cyanoethyl group (propionitrile group), a 1-cyanoethyl group, a 2-cyano-2-propyl group, or a 2-propynyl group (propargyl group).) 4 oxalate ester compounds represented by Formula (III) are listed in Table 3.

### [Table 3]

**Table 3**

| E |
|---|
| -CH₂CH₂C ≡ N |
| -C(CH₃)₂C ≡ N |
| -CH(CH₃)C ≡ N |
| -CH₂C ≡ CH |

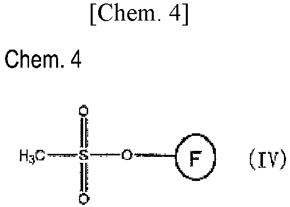

(In the formula, F represents a 2-cyanoethyl group (propionitrile group), a 1-cyanoethyl group, a 2-cyano-2-propyl group, or a 2-propynyl group (propargyl group).) 4 methanesulfonate ester compounds represented by Formula (IV) are listed in Table 4.

### [Table 4]

**Table 4**

| F |
|---|
| -CH₂CH₂C ≡ N |
| -C(CH₃)₂C ≡ N |
| -CH(CH₃)C ≡ N |
| -CH₂C ≡ CH |

The reason why the combined use of the above-mentioned phosphonate ester compound (I), carbonate ester compound (II), oxalate ester compound (III) and methanesulfonate ester compound (IV) is preferable is still no better than a conjecture, but is assumed to be that a strong adsorption layer is formed on a surface of a metal such as aluminum to avoid contact with a corrosive compound. A total content of at least one kind selected from these 40 kinds, that is, one kind or a combination of two or more kinds is preferably 0.01 wt.% or more, more preferably 0.1 wt.% or more, and most preferably 0.5 wt.% or more relative to the total mass of the electrolytic solution for a lithium ion secondary battery of the present disclosure. The upper limit is preferably 10 wt.% or less, more preferably 7 wt.% or less, most preferably 5 wt.% or less with respect to the nonaqueous solvent. A preferable range of the total content of these compounds can be, for example, from 0.01 to 10 wt.%, from 0.01 to 7 wt.%, or from 0.1 to 5 wt.%, relative to the total mass of the electrolytic solution for a lithium ion secondary battery of the present disclosure. The electrolytic solution for a lithium ion secondary battery of the present disclosure contains at least one compound selected from the group consisting of the phosphonate ester compound, the carbonate ester compound, the oxalate ester compound, and the methanesulfonate ester compound in the present disclosure. Thus, the electrolytic solution for a lithium ion secondary battery, when used in a lithium ion secondary battery, can further improve the corrosion resistance of the lithium ion secondary battery, and, in particular, can further improve the corrosion resistance in use at a high voltage exceeding 4.2 V or in use at room temperature or higher. In addition to the electrolyte, the nonaqueous solvent, the cyanomethyl formate, and the compounds represented by Formulae (I), (II), (III), and (IV), the electrolytic solution for a lithium ion secondary battery of the present disclosure may contain other components as long as the electrolytic solution can be used.

According to the present disclosure, even a nonaqueous electrolytic solution containing 1,3-propane sultone, which is usually highly corrosive and has been hesitated to be used, can be used without impairing the corrosion resistance of LIB. When a graphite negative electrode is used in a battery, 1,3-propane sultone has an effect of suppressing reductive decomposition of EC or PC on the graphite negative electrode, and thus is preferably added in an amount in a range of from 0.1 to 5 wt.% relative to the entire nonaqueous electrolytic solution.

Further, according to the present disclosure, even a nonaqueous electrolytic solution containing a dinitrile having a carbon chain length of from 2 to 5, such as succinonitrile, glutaronitrile, adiponitrile, or pimelonitrile, an isocyanate such as hexamethylene diisocyanate (HMDI) or 1,3-bis(isocyanatemethyl)cyclohexane (mixture of cis-and trans-isomers), and a carbodiimide such as N,N'-diisopropylcarbodiimide (DIC) or N,N'-dicyclohexylcarbodiimide (DCC), which have an effect of suppressing corrosion, but have been hesitated to be used because the cycle properties deteriorate as added amounts thereof increase, can be used without impairing the cycle properties of LIB. These compounds are preferably added in a range of from 0.1 to 5 wt.% relative to the entire nonaqueous electrolytic solution.

In the electrolytic solution for a lithium ion secondary battery of the present disclosure, the content of vinylene carbonate with respect to the weight of the entire nonaqueous solvent may be from 0.01 to 10 wt.%, from 0.01 to 7 wt.%, or from 0.1 to 5 wt.%. When the content of the vinylene carbonate is too small, the formation of the protective film of the negative electrode becomes insufficient, so that the cycle properties deteriorate. When the content of the vinylene carbonate is too large, the protective film of the negative electrode becomes thick, and the resistance of the negative electrode increases, leading to deterioration of the cycle properties. In the present disclosure, the electrolytic solution for a lithium ion secondary battery contains cyanomethyl formate and vinylene carbonate therein, and thus can improve the cycle properties of the lithium ion secondary battery, when used in the lithium ion secondary battery.

The electrolytic solution for a lithium ion secondary battery of the present disclosure may further contain at least one selected from the group consisting of trioctyl phosphate, a trifluoroacetic acid ester, and a pivalic acid ester having an alcohol group with a carbon chain length of from 6 to 8. Trioctyl phosphate, trifluoroacetic acid ester, and pivalic acid ester having an alcohol group with a carbon chain length of from 6 to 8 have an effect of enhancing permeability of the electrolytic solution into the separator and reducing interface resistance between the separator and the electrode, and thus it is preferable to add a certain amount thereof. The content of each of trioctyl phosphate, trifluoroacetic acid ester, and pivalic acid ester having an alcohol group with a carbon chain length of from 6 to 8 may be from 0.1 to 3 wt.%, from 0.5 to 2 wt.%, or from 1 to 1.5 wt.%, when the nonaqueous solvent is taken as 100 wt.%.

The trifluoroacetic acid ester is not particularly limited, and may be at least one selected from n-hexyl trifluoroacetate, 2-ethylhexyl trifluoroacetate, n-heptyl trifluoroacetate, n-octyl trifluoroacetate, 2-octyl trifluoroacetate, 3-octyl trifluoroacetate, and 4-octyl trifluoroacetate.

The pivalic acid ester is not particularly limited, and may be at least one selected from n-hexyl pivalate, 2-ethylhexyl pivalate, n-heptyl pivalate, n-octyl pivalate, 2-octyl pivalate, 3-octyl pivalate, and 4-octyl pivalate.

The lithium ion secondary battery of the present disclosure includes a positive electrode, a negative electrode, a separator, and the electrolytic solution for a lithium ion secondary battery of the present disclosure. In the present disclosure, the positive electrode, the negative electrode, and the separator are not particularly limited as long as they can be used in a lithium ion secondary battery. In the present disclosure, the separator is most preferably a separator composed of a microporous film made of a polyolefin material such as polypropylene or polyethylene, but may also be a non-woven fabric separator. The porous sheet or the non-woven fabric may have a single-layer structure or a multi-layer structure, and the surface of the separator may be coated with an oxide such as alumina. The thickness of the separator needs to be as small as possible in order to increase the volume energy density of the battery. Therefore, the thickness is preferably 20 µm or less, and particularly preferably 10 µm or less.

The negative electrode active material used for the negative electrode in the present disclosure may contain at least one selected from graphite, non-graphitizable carbon, silicon, silicon oxide, lithium titanate, and tin. In order to increase the volume energy density, a negative electrode active material may be a graphite material such as natural graphite or artificial graphite, or a carbon material such as hard carbon or soft carbon. In addition, in order to improve rapid charge/discharge, the negative electrode active material used may be a titanium oxide that does not expand or contract during charge/discharge, with examples thereof being a titanium oxide having a spinel structure such as Li₄Ti₅O₁₂ (LTO) and a titanium oxide such as TiNb₂O₇ and Ti₂Nb₁₀O₂₉.

A binder to be used in a negative electrode mixture material can be, for example, ethylene propylene diene terpolymer (EPDM), polytetrafluoroethylene (PTFE), polyvinylidene fluoride (PVDF), a copolymer of styrene and butadiene (SBR), a copolymer of acrylonitrile and butadiene (NBR), or carboxymethyl cellulose (CMC). The negative electrode is produced, for example, by kneading the negative electrode active material with the binder to prepare a negative electrode mixture material in the form of a slurry, applying the negative electrode mixture material to a copper foil or an aluminum foil as a current collector, drying the negative electrode mixture material, press-molding the negative electrode mixture material, and then heat-treating the negative electrode mixture material at 80°C under vacuum.

The positive electrode active material used for the positive electrode in the present disclosure may contain a lithium metal compound containing at least one metal element selected from the group consisting of cobalt, nickel, manganese, and iron. The positive electrode active material may be, for example, LiCoO₂ (LCO); LiCo_{1/3}Ni_{1/3}Mn_{1/3}O₂, LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.8}Co_{0.15}Al_{0.05}O₂ (NCA), in which a part of Co is replaced by Ni or the like; and LiNi_{0.5}Mn_{1.5}O₄ and LiNi_{0.8}Mn_{0.13}Ti_{0.02}Mg_{0.02}Nb_{0.01}Mo_{0.02}O₂ (HE-LNMO), in which no Co is used. In order to increase the volume energy density, NCM523, NCM622, NCM811, NCA, HE-LNMO, or the like may be used as the positive electrode active material containing a lithium composite oxide in which Ni is 50% or more as an atomic ratio. In addition, in order to improve rapid charge/discharge, LiMn₂O₄ (LMO) having a spinel structure and LiFePO₄ (LFP) having an olivine structure may be used.

Examples of a conductive auxiliary used in the positive electrode mixture material may include known or commercially available conductive auxiliaries such as carbon black such as acetylene black and Ketjen black, carbon nanotube, carbon fiber, activated carbon, and graphite. Examples of the binder may include polytetrafluoroethylene (PTFE), polyvinylidene fluoride (PVFF), a copolymer of styrene and butadiene (SBR), a copolymer of acrylonitrile and butadiene (NBR), and carboxymethyl cellulose (CMC). The positive electrode is produced, for example, by kneading the positive electrode active material with the conductive auxiliary and the binder to prepare a positive electrode mixture material in the form of a slurry, applying the positive electrode mixture material to an aluminum foil as a current collector, drying the positive electrode mixture material, press-molding the positive electrode mixture material, and then heat-treating the positive electrode mixture material at 80°C under vacuum. If the battery can be assembled without using the binder, the binder may not be used.

In the present disclosure, in order to increase the volume energy density, a combination of the positive electrode active material and the negative electrode active material may be combinations of LCO and graphite, NCM523 and graphite, NCM622 and graphite, NCM811 and graphite, NCA and graphite, and HE-LNMO and graphite. In addition, in order to improve rapid charge/discharge, a combination of NCM811 and LTO, HE-LNMO and LTO, LFP and LTO, or the like may be used.

Other materials in the lithium ion secondary battery of the present disclosure are not particularly limited as long as they can be used in a lithium ion secondary battery. In the present disclosure, the current collector used is not limited, but is suitably an aluminum foil or a copper foil, and may be a porous current collector which further improves the permeability of the electrolytic solution.

In the present disclosure, the solvent used in the binder is also not particularly limited, and various solvents can be selected depending on the active material or the binder to be used. Specifically, when the binder is PVDF, the solvent is preferably N-methyl-2-pyrrolidone. Meanwhile, when the binder is a rubber-based binder such as styrene butadiene rubber (SBR), polytetrafluoroethylene, polyvinyl alcohol, or carboxymethyl cellulose (CMC), the solvent is suitably water.

In the present disclosure, the structure of the lithium ion secondary battery is not limited, but the secondary battery having a positive electrode, a negative electrode, and a separator may have the shape of, for example, a coin-type battery, a cylindrical battery, a prismatic battery, or a pouch-type battery.

An example of a structure of a pouch-type lithium ion secondary battery will be described with reference to FIG. 1. FIG. 1 is a cross-sectional view illustrating a structure of a lithium ion secondary battery 14. As illustrated in FIG. 1, in the lithium ion secondary battery 14, a negative electrode active material layer 11b may be a layer of a negative electrode material which is a mixture of a negative electrode active material 11c, a conductive auxiliary agent 11d, and an electrolytic solution 11f. In the lithium ion secondary battery 14, a positive electrode active material layer 12b may be a layer of a positive electrode material which is a mixture of a positive electrode active material 12c, a conductive auxiliary agent 12d, and an electrolytic solution 12f.

The negative electrode material may include the negative electrode active material 11c, the conductive auxiliary agent 11d, and the electrolytic solution 11f. The negative electrode 11 may be an electrode obtained by applying the negative electrode material onto a current collector 11a. The positive electrode material may include the positive electrode active material 12c, the conductive auxiliary agent 12d, and the electrolytic solution 12f. The positive electrode 12 may be an electrode obtained by applying the positive electrode material onto a current collector 12a.

The lithium ion secondary battery 14 may further include a separator 13. The negative electrode 11, the positive electrode 12, and the separator 13 may have a positional relationship such that the negative electrode active material layer 11b and the positive electrode active material layer 12b are in contact with the separator 13. That is, the lithium ion secondary battery 14 may have a structure in which the negative electrode 11 and the positive electrode 12 are stacked with the separator 13 interposed therebetween. The separator 13 may serve as an insulating member that insulates the negative electrode 11 and the positive electrode 12. As the separator 13, for example, a sheet-like nonwoven fabric or porous material may be used. Thus, the first electrolytic solution and the second electrolytic solution can penetrate the separator 13.

The present disclosure is not limited to each of the embodiments described above, and various modifications can be made within the scope indicated by the claims, and an embodiment obtained by appropriately combining technical means disclosed in different embodiments is also included in the technical scope of the present disclosure.

### EXAMPLES

Next, the present disclosure will be specifically described by way of Examples and Comparative Examples, but is not limited to these examples. In Examples and Comparative Examples, PC represents propylene carbonate, DMC represents dimethyl carbonate, EC represents ethylene carbonate, EMC represents ethyl methyl carbonate, FEC represents fluoroethylene carbonate, PS represents 1,3-propane sultone, HMDI represents hexamethylene diisocyanate, DCC represents N,N'-dicyclohexylcarbodiimide, LiFSI represents LiN(SO₂F)₂, NCM523 represents LiN_{0.5}Co_{0.2}Mn_{0.3}O₂, NCM811 represents LiNi_{0.8}Co_{0.1}Mn_{0.1}O₂, and LCO represents LiCoO₂.

### [Example 1-1 to 1-2]

An electrolytic solution was prepared according to the compound and the content described in Table 5. In Table 5, EC represents ethylene carbonate, PC represents propylene carbonate, and GBL represents γ-butyrolactone.

LiPF₆ was dissolved in a nonaqueous solvent in which EC/(PC + GBL) was mixed at 1:4 (volume ratio). Cyanomethyl formate (CMF) (available from Tokyo Chemical Industry Co., Ltd.) and vinylene carbonate (VC) were added to the solution thus obtained to prepare electrolytic solutions of Examples 1-1 to 1-2. In the electrolytic solution of Example 1-1, the content of CMF was 0.5 wt.%, the content of VC was 1.5 wt.%, and the content of LiPF₆ was 1 mol/L. In the electrolytic solution of Example 1-2, the content of CMF was 0.25 wt.%, the content of VC was 0.75 wt.%, and the content of LiPF₆ was 1 mol/L.

### [Comparative Example 1-1]

An electrolytic solution of Comparative Example 1-1 was prepared without adding CMF. In Comparative Example 1-1, an electrolytic solution was prepared in the same manner as in Examples 1-1 to 1-2, respectively, except that CMF was not added.

As the positive electrode, NCM523 was used for an active material, acetylene black was used for a conductive material, PVDF was used for a binder, a mass ratio of the positive electrode active material, the conductive material, and the binder was 92:5:3, the positive electrode was coated on an aluminum foil, dried, and press-molded, and the resultant was used. A coating weight of the positive electrode was 0.010 g/cm². As the negative electrode, natural graphite was used for an active material, SBR and CMC were used for a binding material, a mass ratio of the negative electrode active material and the binder was 98:1:1, and the negative electrode was coated on a copper foil, dried, and press-molded, and the resultant was used. The coating weight of the negative electrode was 0.007 g/cm². Using the positive electrode, the negative electrode, and the separator, the electrolytic solutions of Examples 1-1 to 1-2 and Comparative Example 1-1 were respectively used to produce a coin-type battery so that a designed capacity of the battery was 2 mAh.

Using this coin battery, the battery was charged up to an upper limit voltage of 4.2 V at 25°C and a 1 C rate of a constant current and a constant voltage (CC/CV mode), and the voltage was maintained at 4.2 V until a termination current reached 0.03 mA or less. Next, the battery was discharged up to a lower limit voltage of 3.0 V at a 1 C rate, and charge/discharge was repeated to measure the cycle properties. The results are listed in Table 5. A discharge capacity after repeating charge/discharge 50 times is listed as a 50th cycle discharge capacity.

### [Table 5]

**Table 5**

| | Positive electrode | Negative electrode | Electrolyte and solvent | CMF | VC | Compounds other than CMF and VC | | Discharge capacity at 50th cycle (mAh) |
|---|---|---|---|---|---|---|---|---|
| | | | | wt.% | wt.% | Type | Total wt.% | |
| Comparative Example 1-1 | NCM523 | Graphite | (1M LiPF₆) [EC/(PC + GBL) = 1/4] | 0 | 3 | None | None | 1.55 |
| Example 1-1 | NCM523 | Graphite | (1M LiPF₆) [EC/(PC + GBL) = 1/4] | 0.5 | 1.5 | None | None | 1.67 |
| Example 1-2 | NCM523 | Graphite | (1M LiPF₆) [EC/(PC + GBL) = 1/4] | 0.25 | 0.75 | None | None | 1.66 |

From the results of Table 5, it was indicated that when both CMF and VC were added to the electrolytic solution, more excellent cycle properties were obtained than when CMF alone or VC alone was added (Examples 1-1 to 1-2).

### [Examples 2-1 to 2-7]

An electrolytic solution was prepared according to the compound and the content described in Tables 6 and 7. In Tables 6 and 7, EC represents ethylene carbonate, PC represents propylene carbonate, GBL represents γ-butyrolactone, LiFSI represents LiN(SO₂F)₂, TOP represents trioctyl phosphate, CF-2EH represents 2-ethylhexyl trifluoroacetate, PV-2EH represents 2- ethylhexyl pivalate, MA represents maleic anhydride, BP represents biphenyl, and LiBOB represents LiB (C₂O₄)₂.

LiPF₆ or LiFSI was dissolved in a nonaqueous solvent in which EC/(PC + GBL) was mixed at 1:4 (volume ratio). Cyanomethyl formate (CMF) (available from Tokyo Chemical Industry Co., Ltd.) and vinylene carbonate (VC) were added to the solution thus obtained to prepare electrolytic solutions of Examples 2-1 to 2-7. In the electrolytic solutions of Examples 2-1 to 2-3, the content of CMF was 0.75 wt.%, the content of VC was 2.25 wt.%, and the content of LiPF₆ was 1 mol/L. In the electrolytic solutions of Examples 2-4, 2-6, and 2-7, the content of CMF was 1 wt.%, the content of VC was 1 wt.%, and the content of LiFSI was 1 mol/L. In the electrolytic solution of Example 2-5, the content of CMF was 7 wt.%, the content of VC was 7 wt.%, and the content of LiFSI was 1 mol/L. In addition, compounds other than CMF and VC described in Tables 6 and 7 were added in the contents listed in the table to prepare electrolytic solutions of Examples 2-1 to 2-7.

### Comparative Examples 2-1 to 2-4

Electrolytic solutions of Comparative Examples 2-1 to 2-3 were prepared without adding CMF. An electrolytic solution of Comparative Example 2-4 was prepared without adding VC. In Comparative Examples 2-1, 2-2, and 2-3, an electrolytic solution was prepared in the same manner as in Examples 2-1, 2-2, and 2-3, respectively, except that CMF was not added. In Comparative Example 2-4, an electrolytic solution was prepared in the same manner as in Example 2-4 except that VC was not added.

### Production of Lithium Ion Secondary Battery (LIB) and Measurement of Battery Characteristics

As the positive electrode, LiFePO₄ (LFP) was used for an active material, carbon black was used for a conductive material, the above-described electrolytic solution was used, a mass ratio of the positive electrode active material, the conductive material, and the electrolytic solution was 72:1:27, and the positive electrode coated on an aluminum foil was used. The coating weight of the positive electrode was 0.075 g/cm². As the negative electrode, artificial graphite was used for an active material, carbon black was used for a conductive material, the above-described electrolytic solution was used, a mass ratio of the negative electrode active material, the conductive material, and the electrolytic solution was 62:3:35, and the negative electrode coated on a copper foil was used. The coating weight of the negative electrode was 0.051 g/cm². Using the positive electrode, the negative electrode, and the separator, the electrolytic solutions of Examples 2-1 to 2-7 and Comparative Examples 2-1 to 2-4 were respectively used to produce a pouch-type battery so that the designed capacity of the battery was 111 mAh.

Using this pouch-type battery, the battery was charged up to an upper limit voltage of 3.6 V at 45°C and a 0.5 C rate of a constant current and a constant voltage (CC/CV mode), and the voltage was maintained at 3.6 V for 30 minutes. Next, the battery was discharged up to a lower limit voltage of 2.0 V at a 0.5 C rate, and charge/discharge was repeated to measure the cycle properties. The cycle properties (%) were quantified as: the obtained capacities (mAh/g) at 50th cycle/1st cycle x 100. The results are listed in Tables 6 and 7.

**Table 6**

| | Positive electrode | Negative electrode | Electrolyte and solvent | CMF | VC | Compounds other than CMF and VC | | Cycle properties (%) |
|---|---|---|---|---|---|---|---|---|
| | | | | wt.% | wt.% | Type | Total wt.% | |
| Comparative Example 2-1 | LFP | Graphite | (1M LiPF₆) [EC/(PC + GBL) = 1/4] | 0 | 3 | TOP, MA, LiBOB | 2.7 | 91 |
| Example 2-1 | LFP | Graphite | (1M LiPF₆) [EC/(PC + GBL) = 1/4] | 0.75 | 2.25 | TOP, MA, LiBOB | 2.7 | 92 |
| Comparative Example 2-2 | LFP | Graphite | (1M LiPF₆) [EC/(PC + GBL) = 1/4] | 0 | 3 | TOP, LiBOB | 1.9 | 91 |
| Example 2-2 | LFP | Graphite | (1M LiPF₆) [EC/(PC + GBL) = 1/4] | 0.75 | 2.25 | TOP, LiBOB | 1.9 | 92 |
| Comparative Example 2-3 | LFP | Graphite | (1M LiPF₆) [EC/(PC + GBL) = 1/4] | 0 | 3 | TOP, MA | 1.3 | 91 |
| Example 2-3 | LFP | Graphite | (1M LiPF₆) [EC/(PC + GBL) = 1/4] | 0.75 | 2.25 | TOP, MA | 1.3 | 93 |

### [Table 7]

**Table 7**

| | Positive electrode | Negative electrode | Electrolyte and solvent | CMF | VC | Compounds other than CMF and VC | | Cycle properties (%) |
|---|---|---|---|---|---|---|---|---|
| | | | | wt.% | wt.% | Type | Total wt.% | |
| Comparative Example 2-4 | LFP | Graphite | (1M LiFSI) [EC/(PC + GBL) = 1/4] | 1 | 0 | TOP | 0.5 | 88 |
| Example 2-4 | LFP | Graphite | (1M LiFSI) [EC/(PC + GBL) = 1/4] | 1 | 1 | TOP | 0.5 | 90 |
| Example 2-5 | LFP | Graphite | (1M LiFSI) [EC/(PC + GBL) = 1/4] | 7 | 7 | TOP | 0.5 | 89 |
| Example 2-6 | LFP | Graphite | (1M LiFSI) [EC/(PC + GBL) = 1/4] | 1 | 1 | CF-2EH, PV-2EH | 1 | 90 |
| Example 2-7 | LFP | Graphite | (1M LiFSI) [EC/(PC + GBL) = 1/4] | 1 | 1 | TOP, MA, BP, LiBOB | 3 | 92 |

From the results of Tables 6 and 7, it was indicated that when both CMF and VC were added to the electrolytic solution, more excellent cycle properties were obtained than when CMF alone or VC alone was added (Examples 2-1 to 2-7).

### INDUSTRIAL APPLICABILITY

By using the nonaqueous electrolytic solution of the present disclosure, battery characteristics such as the cycle properties of a battery can be improved. The present disclosure may give incalculable contribution when a large number of lithium ion secondary batteries such as vehicle-mounted batteries are used for a long period of time.

### REFERENCE SIGNS

11 Negative electrode
11a Current collector
11b Negative electrode active material layer
11c Negative electrode active material
11d Conductive auxiliary agent
11f Electrolytic solution
12 Positive electrode
12a Current collector
12b Positive electrode active material layer
12c Positive electrode active material
12d Conductive auxiliary agent
12f Electrolytic solution
13 Separator
14 Lithium ion secondary battery

## Claims

1. An electrolytic solution for a lithium ion secondary battery in which an electrolyte salt is dissolved in a nonaqueous solvent, the electrolytic solution for a lithium ion secondary battery comprising cyanomethyl formate and vinylene carbonate.

2. The electrolytic solution for a lithium ion secondary battery according to claim 1, comprising from 0.01 to 7 wt.% of the cyanomethyl formate and from 0.01 to 7 wt.% of the vinylene carbonate, when the nonaqueous solvent is taken as 100 wt.%.

3. The electrolytic solution for a lithium ion secondary battery according to claim 1 or 2, wherein the nonaqueous solvent comprises at least two selected from ethylene carbonate, propylene carbonate, and γ-butyrolactone.

4. The electrolytic solution for a lithium ion secondary battery according to claim 3, wherein the nonaqueous solvent comprises the ethylene carbonate, the propylene carbonate, and the γ-butyrolactone at a volume ratio of ethylene carbonate/(propylene carbonate + γ-butyrolactone) = 65/35 to 10/90.

5. The electrolytic solution for a lithium ion secondary battery according to any one of claims 1 to 4, wherein the electrolyte salt comprises LiPF₆ and/or LiN(SO₂F)₂.

6. The electrolytic solution for a lithium ion secondary battery according to any one of claims 1 to 5, comprising from 0.5 to 3 mol/L of the electrolyte salt with respect to the nonaqueous solvent.

7. The electrolytic solution for a lithium ion secondary battery according to any one of claims 1 to 6, further comprising at least one selected from the group consisting of: from 0.1 to 3 wt.% of trioctyl phosphate; from 0.1 to 3 wt.% of a trifluoroacetic acid ester; and from 0.1 to 3 wt.% of a pivalic acid ester having an alcohol group with a carbon chain length of from 6 to 8, when the nonaqueous solvent is taken as 100 wt.%.

8. The electrolytic solution for a lithium ion secondary battery according to claim 7, wherein the trifluoroacetic acid ester is at least one selected from n-hexyl trifluoroacetate, 2-ethylhexyl trifluoroacetate, n-heptyl trifluoroacetate, n-octyl trifluoroacetate, 2-octyl trifluoroacetate, 3-octyl trifluoroacetate, and 4-octyl trifluoroacetate.

9. The electrolytic solution for a lithium ion secondary battery according to claim 7, wherein the pivalic acid ester is at least one selected from n-hexyl pivalate, 2-ethylhexyl pivalate, n-heptyl pivalate, n-octyl pivalate, 2-octyl pivalate, 3-octyl pivalate, and 4-octyl pivalate.

10. The electrolytic solution for a lithium ion secondary battery according to any one of claims 1 to 9, wherein the nonaqueous solvent further comprises at least one selected from fluoroethylene carbonate, succinic anhydride, maleic anhydride, biphenyl, LiBF₂(C₂O₄), LiB(C₂O₄)₂(LiBOB), 1,3-propane sultone, and ethylene sulfate, in a total amount of 1 wt.% or more and 10 wt.% or less.

11. A lithium ion secondary battery, comprising a positive electrode, a negative electrode, a separator, and the electrolytic solution for a lithium ion secondary battery according to any one of claims 1 to 10.

12. The lithium ion secondary battery according to claim 11, wherein the positive electrode comprises, as a positive electrode active material, a lithium metal compound containing at least one metal element selected from the group consisting of cobalt, nickel, manganese, and iron, and
the negative electrode comprises, as a negative electrode active material, at least one selected from graphite, non-graphitizable carbon, silicon, silicon oxide, lithium titanate, and tin.
